# FASCICULE DE BREVET EUROPEEN

(11) **EP 3 265 663 B1**
(45) Date de publication et mention de la délivrance du brevet: **01.05.2019**
(21) Numéro de dépôt: 16714990.5
(22) Date de dépôt: 02.03.2016
(51) Int. Cl.: F02K 9/52

(54) **INJECTEUR D'ERGOL AMELIORÉ PERMETTANT UN PRÉLÈVEMENT D'ERGOL EN ASSURANT UNE INJECTION HOMOGÈNE**
VERBESSERTER TREIBSTOFFINJEKTOR ZUR ABGABE VON TREIBMITTEL UNTER GEWÄHRLEISTUNG EINER GLEICHMÄSSIGEN INJEKTION
IMPROVED PROPELLANT INJECTOR ALLOWING PROPELLANT TO BE DISCHARGED WHILE ENSURING UNIFORM INJECTION

(30) Priorité: 05.03.2015 FR 1551867
(43) Date de publication de la demande: 10.01.2018
(73) Titulaire: ArianeGroup SAS, 75015 Paris (FR)
(72) Inventeur: LE CRAS, Jean-Luc, 27950 Saint-Marcel (FR); DELAHAYE, Olivier, 76350 Oissel (FR); GUICHARD, Didier, 27120 Menilles (FR); CRUZ, Carlos, 27600 Gaillon (FR); HUMBERT, Erwan, 27620 Bois-Jérôme Saint-Ouen (FR)
(74) Mandataire: Gilbey, Vincent
(86) Numéro de dépôt international: PCT/FR2016/050464
(87) Numéro de publication internationale: WO 2016/139417

(56) Documents cités:
- FR-A1- 2 967 726
- US-A- 4 621 492
- US-A1- 2011 219 743

## Description

### DOMAINE TECHNIQUE GENERAL

La présente invention concerne le domaine des organes de combustion, par exemple la chambre de combustion d'un moteur d'engin spatial, et concerne plus précisément, la structure d'un injecteur d'ergols d'un organe de combustion.

### ETAT DE L'ART

Les organes de combustion comprennent un injecteur adapté pour injecter et mélanger deux ergols de la manière la plus homogène possible.

Or, dans le cadre de certaines applications, un prélèvement d'un des ergols afin d'alimenter un autre organe, par exemple une turbine, est effectué.

Les systèmes d'injection comprennent donc communément un conduit de prélèvement, prélevant l'un des ergols préalablement à l'injection. De tels prélèvement d'ergol perturbent l'écoulement, et nuisent donc à l'homogénéité de l'injection.

Des structures d'injecteurs ont été proposées afin de limiter les perturbations de l'écoulement dues à ce prélèvement d'ergol, mais s'avèrent très complexes à réaliser, et très contraignantes en termes d'étanchéité du fait de la segmentation nécessaire pour la réalisation de telles pièces. Le document FR2967726 divulgue une tête d'injection d'une chambre de combustion d'un moteur-fusée.

### PRESENTATION DE L'INVENTION

La présente invention vise ainsi à remédier au moins partiellement à ces problématiques, et propose un injecteur d'un organe de combustion d'ergols, comprenant
- une première alimentation adaptée pour réaliser une alimentation en un premier ergol liquide,
- une seconde alimentation adaptée pour réaliser une alimentation en un second ergol liquide,
la première alimentation étant reliée à une pluralité de cheminées d'alimentation disposés autour d'un tube allumeur présentant un axe longitudinal, lesdites cheminées d'alimentation s'étendant selon ledit axe longitudinal,
la seconde alimentation étant configurée de manière à déverser un débit uniforme de liquide dans une chambre d'injection,
ladite chambre d'injection étant reliée à une pluralité de fourreaux d'alimentation au moyen d'orifices d'injection, chaque cheminée d'alimentation étant entourée d'un fourreau d'alimentation coaxial, de manière à ce que les cheminées d'alimentation et les fourreaux d'alimentation soient alimentés en parallèle du premier et du second ergol respectivement,
caractérisé en ce que
l'injecteur comprend en outre une chambre de prélèvement reliée à un conduit de prélèvement du second ergol, ladite chambre de prélèvement étant aménagé de manière à prélever de manière homogène du second ergol liquide de la chambre d'injection,
l'injecteur étant configuré de manière à réaliser une injection homogène du second ergol via les orifices d'injection.

Selon un mode de réalisation particulier, la chambre de prélèvement est reliée à la chambre d'injection via une pluralité de canaux de prélèvement, débouchant dans la chambre d'injection selon une répartition régulière autour de l'axe longitudinal, de sorte que le prélèvement de liquide dans la chambre d'injection via les canaux de prélèvement permette une injection homogène du second ergol via les orifices d'injection.
La chambre d'injection peut alors s'étendre selon la direction longitudinale définie par l'axe longitudinal entre une face supérieure et une face inférieure, et lesdits canaux de prélèvement sont alors aménagés dans la face supérieure de la chambre d'injection, tandis que les orifices d'injection sont aménagés dans une portion inférieure de la chambre d'injection, s'étendant sur deux tiers de la hauteur de la chambre d'injection mesurée selon la direction longitudinale, à partir de la face inférieure de la chambre d'injection.

La première alimentation est par exemple reliée à la pluralité de cheminées d'alimentation par l'intermédiaire d'une couronne d'injection primaire, configurée de manière à réaliser une alimentation uniforme en premier ergol desdites cheminées d'alimentation.
La couronne d'injection primaire est alors par exemple aménagée autour de la chambre de prélèvement.

La seconde alimentation est par exemple reliée à la chambre d'injection par l'intermédiaire d'une couronne d'injection secondaire, configurée de manière à réaliser une alimentation uniforme en second ergol de la chambre d'injection.

Les cheminées d'alimentation sont par exemple aménagées de manière symétriques par rapport à l'axe longitudinal.

L'injecteur est par exemple formé d'une tête d'injection et d'une plaque d'injection, la tête d'injection est alors par exemple formée en une seule pièce par fabrication additive, et la plaque d'injection peut être fabriquée par tout procédé adapté, et peut notamment être réalisée en un matériau à forte conduction pouvant être différent de celui dont est formée la tête d'injection.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- Les figures 1 et 2 présentent deux vues en coupe selon deux plans distincts d'un injecteur selon un aspect de l'invention ;
- Les figures 3 à 6 présentent d'autres vues d'un injecteur selon un aspect de l'invention.

Sur l'ensemble des figures, les éléments en commun sont repérés par des références numériques identiques.

### DESCRIPTION DETAILLEE

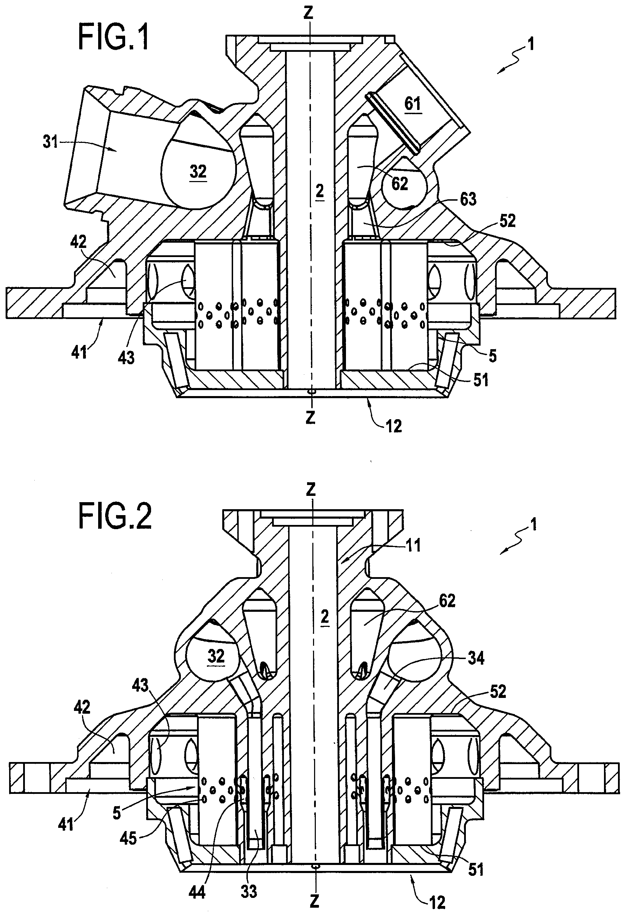

Les figures 1 et 2 présentent deux vues en coupe selon deux plans distincts d'un injecteur selon un aspect de l'invention. Les deux plans de coupe utilisés pour la réalisation des figures 1 et 2 sont deux plans perpendiculaires, passant chacun par un axe longitudinal Z-Z tel que représenté sur les figures.

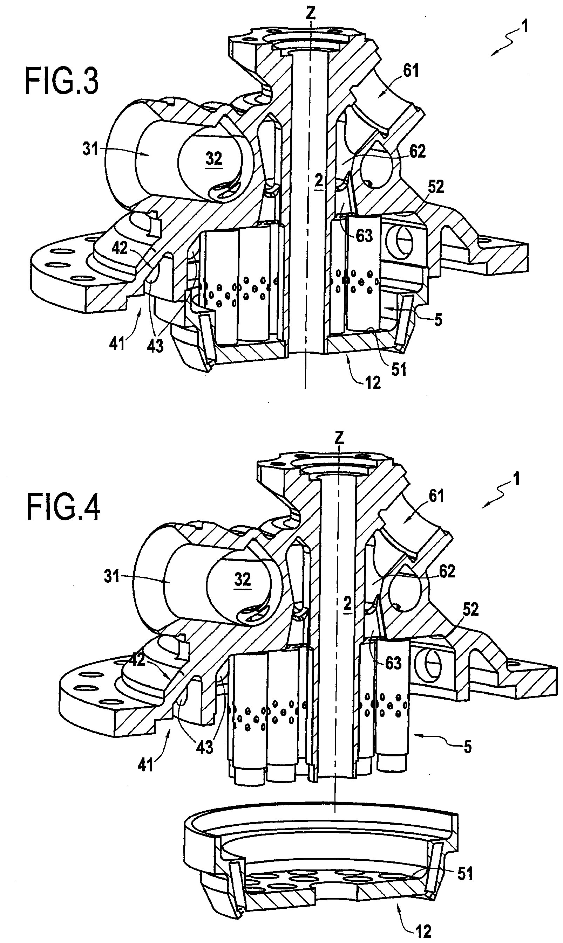

Les figures 3 à 6 présentent d'autres angles de vue de ces deux vues en coupe, permettant notamment de préciser la structure interne de l'injecteur.

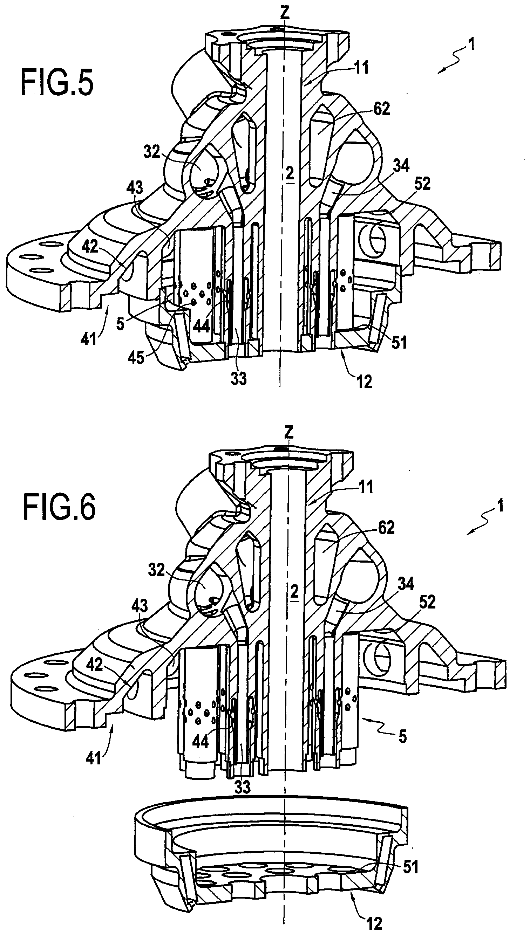

Les figures 3 et 4 sont ainsi deux vues alternatives de la figure 1, la figure 4 étant une vue éclatée de la figure 3, et les figures 5 et 6 sont deux vues alternatives de la figure 2, la figure 6 étant une vue éclatée de la figure 5.

On représente sur les figures un injecteur 1, présentant un tube allumeur central 2 s'étendant selon un axe longitudinal Z-Z définissant une direction longitudinale de l'injecteur 1.

L'injecteur 1 tel que représenté est formé de deux éléments ; une tête d'injection 11 et un couvercle d'injection 12, qui sont assemblés afin de former l'injecteur 1.

L'injecteur 1 comprend deux alimentations en ergols ; une première alimentation 31 adaptée pour alimenter l'injecteur 1 en un premier ergol, par exemple, de l'oxygène liquide, et une seconde alimentation 41 adaptée pour alimenter l'injecteur 1 en un second ergol, par exemple, de l'hydrogène liquide.

La première alimentation 31 est reliée à une pluralité de cheminées d'alimentation 33, disposés autour du tube allumeur 2 et s'étendant chacune selon la direction longitudinale, ces cheminées débouchant à une extrémité inférieur de l'injecteur 1.
La première alimentation 31 est typiquement reliée aux cheminées d'alimentation 33 via une couronne d'injection primaire 32, formant par exemple un tore autour de l'axe longitudinal Z-Z. Cette couronne d'injection primaire 32 est configurée de manière à uniformiser l'alimentation en premier ergol en provenance de la première alimentation 31 via un tore à section évolutive dans l'exemple illustré, afin de réaliser une alimentation uniforme en premier ergol des cheminées d'alimentation 33.

La seconde alimentation 41 permet quant à elle d'alimenter en un second ergol des fourreaux d'alimentation 44, entourant chacun une cheminée d'alimentation 33, typiquement de sorte que chaque cheminée d'alimentation 33 soit entourée par un fourreau d'alimentation 44 coaxial, et débouchant également à l'extrémité inférieur de l'injecteur 1.

La seconde alimentation 41 est typiquement reliée à une couronne d'injection secondaire 42, configurée de manière à uniformiser l'alimentation en second ergol en provenance de la seconde alimentation 41 afin d'alimenter une chambre d'injection 5 via des orifices d'alimentation 43 aménagés dans la couronne d'injection secondaire 42, typiquement de manière symétrique par rapport à l'axe longitudinal Z-Z.

Un flux de second ergol sensiblement homogène autour de l'axe longitudinal Z-Z est ainsi injecté dans la chambre d'alimentation 5. Ce flux remplit donc la chambre d'alimentation 5 de manière sensiblement homogène, puis une partie est injectée dans des fourreaux d'alimentation 44, aménagés autour des cheminées d'alimentation 33, via des orifices d'injection 45 reliant les fourreaux d'alimentation 44 à la chambre d'injection 5.

La chambre d'injection 5 étant alimentée de manière homogène, les fourreaux d'alimentation 44 sont également alimentés de manière homogène autour de l'axe longitudinal Z-Z.

La chambre d'injection 5 telle que représentée s'étend selon la direction longitudinale définie par l'axe longitudinal Z-Z. On définit ainsi une face supérieure 52 et une face inférieure 51 de la chambre d'injection 5, les dénominations « supérieure » et « inférieure » étant choisies arbitrairement.
Les orifices d'injection 45 sont alors typiquement aménagés dans une portion inférieure de la chambre d'injection 5, s'étendant sur deux tiers de la hauteur de la chambre d'injection 5 mesurée selon la direction longitudinale, à partir de la face inférieure 51 de la chambre d'injection 5, ou encore dans la moitié inférieure de la chambre d'injection 5, s'étendant sur la moitié de la hauteur de la chambre d'injection 5 mesurée selon la direction longitudinale, à partir de la face inférieure 51 de la chambre d'injection 5.

L'injecteur 1 comprend également un conduit de prélèvement 61, adapté pour prélever une partie du second ergol de la chambre d'injection 5 afin d'alimenter un composant tel qu'une turbine, ou un circuit de refroidissement aval, ou un allumeur de type basse pression fonctionnant en continu.
Le conduit de prélèvement 61 tel que représenté est relié à une chambre de prélèvement 62, s'étendant typiquement autour de l'axe longitudinal Z-Z, et reliée à la chambre d'injection 5 au moyen d'une pluralité de canaux de prélèvement 63.
La chambre de prélèvement 62 est typiquement aménagée de manière symétrique autour de l'axe longitudinal Z-Z, et est configurée de manière à uniformiser le débit de second ergol prélevé par les canaux de prélèvement 63 afin qu'un débit uniforme de second ergol soit délivré par le conduit de prélèvement 61.

Ces canaux de prélèvement 63 débouchent par exemple dans la chambre d'injection 5 via la face supérieure 52 de la chambre d'injection 5.

Ainsi, le second ergol est injecté dans la chambre d'injection 5 via la couronne d'injection secondaire 42, puis une partie du second ergol est injectée dans les fourreaux d'alimentation 44 via les orifices d'injection 45, et une autre partie du second ergol est prélevée via les canaux de prélèvement 63, la chambre de prélèvement 62 et le conduit de prélèvement 61.

Les canaux de prélèvement 63 sont aménagés dans l'injecteur 1 de manière à ne pas perturber le flux de second ergol au sein de la chambre d'injection 5, et donc à ce que le flux de second ergol injecté dans les fourreaux d'alimentation 44 via les orifices d'injection 45 demeure homogène autour de l'axe longitudinal Z-Z.

Les canaux de prélèvement 63 sont ainsi disposés selon une répartition régulière autour de l'axe longitudinal Z-Z, afin de réaliser un prélèvement axisymétrique du second ergol par rapport à l'axe longitudinal Z-Z.

Une telle répartition régulière autour de l'axe longitudinal Z-Z permet ainsi d'uniformiser le prélèvement du second ergol, de sorte que le profil de pression dynamique au droit des différents orifices d'injection 45 soit uniforme autour de l'axe longitudinal Z-Z, ce qui entraine donc que le flux de second ergol injecté dans les fourreaux d'alimentation 44 via les orifices d'injection 45 est uniforme autour de l'axe longitudinal Z-Z.

L'injecteur 1 peut comprendre une multitude de canaux de prélèvement 63, afin notamment d'homogénéiser l'impact de ces prélèvements sur l'injection du second ergol.
Les canaux de prélèvement 63 peuvent ainsi être répartis autour de l'axe longitudinal Z-Z, sur tout ou partie de la face supérieure 52 de la chambre d'injection 5. Les canaux de prélèvement 63 peuvent par exemple être répartis selon plusieurs cercles concentriques autour de l'axe longitudinal Z-Z.
L'injecteur 1 peut ainsi par exemple comprendre une chambre intermédiaire entre la chambre de prélèvement 62 et la chambre d'injection 5, à laquelle sont reliés une multitude de canaux de prélèvement 63. Cette chambre intermédiaire s'étend alors par exemple sensiblement radialement par rapport à l'axe longitudinal Z-Z, et assure alors la liaison entre les canaux de prélèvement 63 et la chambre de prélèvement 62.

De plus, les canaux de prélèvement 63 sont avantageusement aménagés à une distance suffisante des orifices d'injection 45, afin que le prélèvement de second ergol par les canaux de prélèvement 63 ne perturbe pas le profil de pression dynamique au droit des différents orifices d'injection 45, ou à tout le moins que les perturbations engendrées soient limitées, et que l'injection de second ergol dans les fourreaux d'alimentation 44 via les orifices d'injection 45 demeure homogène autour de l'axe longitudinal Z-Z, c'est-à-dire que les différents fourreaux d'alimentation 44 soient alimentés de manière uniforme autour de l'axe longitudinal Z-Z par les orifices d'injection 45.

Dans le mode de réalisation représenté, les canaux de prélèvement 63 débouchent ainsi dans la chambre d'injection 5 via la face supérieure 52 de la chambre d'injection 5, tandis que les orifices d'injection 45 sont aménagés sensiblement à mi-hauteur entre la face supérieure 52 et la face inférieure 51 de la chambre d'injection 5.

Assurer ainsi un espacement minimum entre les canaux de prélèvement 63 et les orifices d'injection 45 permet d'éviter que la sortie de second ergol via les canaux de prélèvement 63 ne perturbe le profil de pression dynamique au droit des différents orifices d'injection 45.

L'injecteur 1 tel que proposé permet donc de réaliser un prélèvement du second ergol sans perturber l'injection réalisée, ce qui est avantageux notamment en termes de stabilité de l'injection ainsi qu'en homogénéité de température de combustion entre chaque couronne d'injection.

L'injecteur 1 est par exemple réalisé via un procédé de fabrication additive. Dans le cas où l'injecteur 1 est formé de plusieurs composants, comme par exemple représenté sur les figures où l'injecteur 1 tel que représenté est formé de deux éléments ; une tête d'injection 11 et une plaque d'injection 12. La tête d'injection est alors typiquement réalisée par fabrication additive de manière à être formée en une seule pièce, alors que la plaque d'injection peut être réalisée par tout autre moyen. Un tel procédé de fabrication permet de réaliser des formes complexes en une seule pièce, ou à tout en moins en un nombre limité de pièces, comprenant notamment un réseau de conduits et de volumes internes, tout en demeurant plus simple à mettre en oeuvre que par exemple un procédé de fonderie utilisant des noyaux destructibles, ou qu'un procédé nécessitant un assemblage ultérieur de nombreux composants.

## Revendications

1. Injecteur (1) d'un organe de combustion d'ergols, comprenant une pluralité de cheminées d'alimentation (33), un tube allumeur (2), une chambre d'injection (5), une pluralité de fourreaux d'alimentation (44),
- une première alimentation (31) adaptée pour réaliser une alimentation en un premier ergol liquide,
- une seconde alimentation (41) adaptée pour réaliser une alimentation en un second ergol liquide,
la première alimentation (31) étant reliée à la pluralité de cheminées d'alimentation (33) disposées autour du tube allumeur (2) présentant un axe longitudinal (Z-Z), lesdites cheminées d'alimentation (33) s'étendant selon ledit axe longitudinal (Z-Z),
la seconde alimentation (41) étant configurée de manière à déverser un débit uniforme de liquide dans la chambre d'injection (5),
ladite chambre d'injection (5) étant reliée à la pluralité de fourreaux d'alimentation (44) au moyen d'orifices d'injection (45), chaque cheminée d'alimentation (33) étant entourée d'un fourreau d'alimentation (44) coaxial, de manière à ce que les cheminées d'alimentation (33) et les fourreaux d'alimentation (44) soient alimentés en parallèle du premier et du second ergol respectivement, l'injecteur (1) étant configuré de manière à réaliser une injection homogène du second ergol via les orifices d'injection (45),
**caractérisé en ce que**
l'injecteur (1) comprend en outre une chambre de prélèvement (62) reliée à un conduit de prélèvement (61) du second ergol, ladite chambre de prélèvement (62) étant aménagée de manière à prélever du second ergol liquide de la chambre d'injection (5).

2. Injecteur (1) selon la revendication 1, dans lequel la chambre de prélèvement (62) est reliée à la chambre d'injection (5) via une pluralité de canaux de prélèvement (63), débouchant dans la chambre d'injection (5) selon une répartition régulière autour de l'axe longitudinal (Z-Z), de sorte que le prélèvement de liquide dans la chambre d'injection (5) via les canaux de prélèvement (63) permette une injection homogène du second ergol via les orifices d'injection (45).

3. Injecteur (1) selon la revendication 2, dans lequel la chambre d'injection (5) s'étend selon la direction longitudinale définie par l'axe longitudinal (Z-Z) entre une face supérieure (52) et une face inférieure (51),
et dans lequel lesdits canaux de prélèvement (63) sont aménagés dans la face supérieure (52) de la chambre d'injection (5), tandis que les orifices d'injection (45) sont aménagés dans une portion inférieure de la chambre d'injection (5), s'étendant sur deux tiers de la hauteur de la chambre d'injection (5) mesurée selon la direction longitudinale, à partir de la face inférieure (51) de la chambre d'injection (5).

4. Injecteur (1) selon l'une des revendications 1 à 3, dans lequel la première alimentation (31) est reliée à la pluralité de cheminées d'alimentation (33) par l'intermédiaire d'une couronne d'injection primaire (32), configurée de manière à réaliser une alimentation uniforme en premier ergol desdites cheminées d'alimentation (33).

5. Injecteur (1) selon la revendication 4, dans lequel la couronne d'injection primaire (32) est aménagée autour de la chambre de prélèvement (62).

6. Injecteur (1) selon l'une des revendications 1 à 5, dans lequel la seconde alimentation (41) est reliée à la chambre d'injection (5) par l'intermédiaire d'une couronne d'injection secondaire (42), configurée de manière à réaliser une alimentation uniforme en premier ergol de la chambre d'injection (5).

7. Injecteur (1) selon l'une des revendications 1 à 6, dans lequel lesdites cheminées d'alimentation (33) sont aménagées de manière symétriques par rapport à l'axe longitudinal (Z-Z).

8. Injecteur (1) selon l'une des revendications 1 à 7, formé d'une tête d'injection (11) et d'une plaque d'injection (12), la tête d'injection étant formée en une seule pièce par fabrication additive.

## Patentansprüche

1. Injektor (1) eines Bauteils zur Verbrennung von Treibstoff, umfassend mehrere Versorgungszylindern (33), ein Zündrohr (2), eine Injektionskammer (5), mehrere Versorgungshülsen (44),
- wobei eine erste Versorgung (31) angepasst ist, um eine Versorgung mit einem ersten flüssigen Treibstoff umzusetzen,
- wobei eine zweite Versorgung (41) angepasst ist, um eine Versorgung mit einem zweiten flüssigen Treibstoff umzusetzen,
wobei die erste Versorgung (31) mit den mehreren Versorgungszylindern (33) verbunden ist, die um das Zündrohr (2) angeordnet sind, das eine Längsachse (Z-Z) aufweist, wobei sich die Versorgungszylinder (33) entlang der Längsachse (Z-Z) erstrecken,
wobei die zweite Versorgung (41) ausgestaltet ist, um einen gleichmäßigen Durchfluss von Flüssigkeit in die Injektionskammer (5) abzuleiten,
wobei die Injektionskammer (5) mithilfe von Injektionsöffnungen (45) mit den mehreren Versorgungshülsen (44) verbunden ist, wobei jeder Versorgungszylinder (33) von einer koaxialen Versorgungshülse (44) umgeben ist, damit die Versorgungszylinder (33) und die Versorgungshülsen (44) jeweils parallel mit dem ersten und zweiten Treibstoff versorgt werden, wobei der Injektor (1) ausgestaltet ist, um eine gleichmäßige Injektion des zweiten Treibstoffs über die Injektionsöffnungen (45) umzusetzen,
**dadurch gekennzeichnet, dass**
der Injektor (1) außerdem eine Abgabekammer (62) umfasst, die mit einem Abgaberohr (61) des zweiten Treibstoffs verbunden ist, wobei die Abgabekammer (62) angeordnet ist, um den zweiten flüssigen Treibstoff aus der Injektionskammer (5) abzugeben.

2. Injektor (1) nach Anspruch 1, wobei die Abgabekammer (62) mit der Injektionskammer (5) über mehrere Abgabekanälen (63) verbunden ist, die mit einer gleichmäßigen Verteilung um die Längsachse (Z-Z) in die Injektionskammer (5) münden, sodass die Abgabe von Flüssigkeit in die Injektionskammer (5) über die Abgabekanäle (63) eine gleichmäßige Injektion des zweiten Treibstoffs über die Injektionsöffnungen (45) ermöglicht.

3. Injektor (1) nach Anspruch 2, wobei sich die Injektionskammer (5) entlang der durch die Längsachse (Z-Z) definierten Längsrichtung zwischen einer oberen Fläche (52) und einer unteren Fläche (51) erstreckt,
und wobei die Abgabekanäle (63) in der oberen Fläche (52) der Injektionskammer (5) angeordnet sind, während die Injektionsöffnungen (45) in einem unteren Teil der Injektionskammer (5) angeordnet sind, der sich bei zwei Dritteln der Höhe der Injektionskammer (5), gemessen entlang der Längsrichtung, von der unteren Fläche (51) der Injektionskammer (5) erstreckt.

4. Injektor (1) nach einem der Ansprüche 1 bis 3, wobei die erste Versorgung (31) durch eine primäre Injektionskrone (32) mit den mehreren Versorgungszylindern (33) verbunden und ausgestaltet ist, um eine gleichmäßige Versorgung der Versorgungszylinder (33) mit dem ersten Treibstoff umzusetzen.

5. Injektor (1) nach Anspruch 4, wobei die primäre Injektionskrone (32) um die Abgabekammer (62) angeordnet ist.

6. Injektor (1) nach einem der Ansprüche 1 bis 5, wobei die zweite Versorgung (41) durch eine sekundäre Injektionskrone (42) mit der Injektionskammer (5) verbunden und ausgestaltet ist, um eine gleichmäßige Versorgung der Injektionskammer (5) mit dem ersten Treibstoff umzusetzen.

7. Injektor (1) nach einem der Ansprüche 1 bis 6, wobei die Versorgungszylinder (33) in Bezug auf die Längsachse (Z-Z) symmetrisch angeordnet sind.

8. Injektor (1) nach einem der Ansprüche 1 bis 7, gebildet aus einem Injektionskopf (11) und einer Injektionsplatte (12), wobei der Injektionskopf durch eine additive Fertigung aus einem einzigen Stück gebildet wird.

## Claims

1. An injector (1) of a propellant combustion member, the injector comprising a plurality of feed chimneys (33), an igniter tube (2), an injection chamber (5), a plurality of feed sheaths (44):
• a first feed (31) adapted to feed a first liquid propellant; and
• a second feed (41) adapted to feed a second liquid propellant;
• the first feed (31) being connected to the plurality of feed chimneys (33) arranged around the ignition tube (2) presenting a longitudinal axis (Z-Z), said feed chimneys (33) extending along said longitudinal axis (Z-Z) ;
• the second feed (41) being configured so as to deliver a uniform flow of liquid into the injection chamber (5); and
• said injection chamber (5) being connected to the plurality of feed sheaths (44) by means of injection orifices (45), each feed chimney (33) being surrounded by a coaxial feed sheath (44) so that the feed chimneys (33) and the feed sheaths (44) are fed in parallel respectively with the first and second propellants, the injector being configured to achieve uniform injection of the second propellant via the injection orifices (45),
the injector (1) being **characterized in that** it further comprises a takeoff chamber (62) connected to a takeoff duct (61) for taking off the second propellant, said takeoff chamber (62) being arranged in such a manner as to take off the second liquid propellant from the injection chamber (5).

2. An injector (1) according to claim 1, wherein the takeoff chamber (62) is connected to the injection chamber (5) via a plurality of takeoff channels (63) opening out into the injection chamber (5) in a regular distribution around the longitudinal axis (Z-Z) so that liquid takeoff from the injection chamber (5) via the takeoff channels (63) allows the second propellant to be injected uniformly via the injection orifices (45).

3. An injector (1) according to claim 2, wherein the injection chamber (5) extends in the longitudinal direction defined by the longitudinal axis (Z-Z) between a top face (52) and a bottom face (51), and wherein said takeoff channels (62) are arranged in the top face (52) of the injection chamber (5), while the injection orifices (45) are arranged in a bottom portion of the injection chamber (5) extending over two-thirds of the height of the injection chamber (5) measured in the longitudinal direction from the bottom face (51) of the injection chamber (5).

4. An injector (1) according to any one of claims 1 to 3, wherein the first feed (31) is connected to the plurality of feed chimneys (33) via a primary injection column (32) configured in such a manner as to feed said feed chimneys (33) uniformly with the first propellant.

5. An injector (1) according to claim 4, wherein the primary injection ring (32) is arranged around the takeoff chamber (62).

6. An injector (1) according to any one of claims 1 to 5, wherein the second feed (41) is connected to the injection chamber (5) via a secondary injection ring (42) configured so as to feed the injection chamber (5) with the first propellant in uniform manner.

7. An injector (1) according to any one of claims 1 to 6, wherein said feed chimneys (33) are arranged in symmetric manner relative to the longitudinal axis (Z-Z).

8. An injector (1) according to any one of claims 1 to 7, formed by an injector head (11) and an injector plate (12), the injector head being made as a single piece by additive fabrication.
